# EUROPÄISCHE PATENTSCHRIFT

(11) **EP 0 513 537 B1**
(45) Veröffentlichungstag und Bekanntmachung des Hinweises auf die Patenterteilung: **06.09.1995**
(21) Anmeldenummer: 92106406.9
(22) Anmeldetag: 14.04.1992
(51) Int. Cl.: B60T 8/26, B60T 8/40, B60T 13/52

(54) **Hydraulische Fahrzeugbremsanlage mit Blockierschutzeinrichtung**
Hydraulic brake system with anti-lock device
Système de freinage hydraulique avec dispositif anti-blocage

(30) Priorität: 16.05.1991 DE 4116009
(43) Veröffentlichungstag der Anmeldung: 19.11.1992
(73) Patentinhaber: ROBERT BOSCH GMBH, 70442 Stuttgart (DE)
(72) Erfinder: Bernhardt, Wolfgang, Ing., W-7015 Korntal (DE)

(56) Entgegenhaltungen:
- DE-A- 3 410 083
- DE-A- 3 723 917
- DE-A- 3 742 364

## Beschreibung

### Stand der Technik

Die Erfindung geht aus von einer Fahrzeugbremsanlage nach der Gattung des Hauptanspruchs. Durch die GB-PS 20 24 354 und die DE-A-4 004 316 sind hydraulische Fahrzeugbremsanlagen bekannt mit Bremskraftverstärkern, mit Hauptbremszylindern und mit Radbremszylindern und mit zwischen dem jeweiligen Hauptbremszylinder und den Radbremsen angeordneten Blockierschutzeinrichtungen. Die Blockierschutzeinrichtungen arbeiten beispielsweise nach dem sogenannten Plungerprinzip oder beispielsweise nach dem sogenannten Rückförderprinzip. Die Bremskraftverstärker sind beispielsweise zum Betrieb mittels Unterdruck ausgebildet und weisen je eine Verstärkerkammer auf. Solcher Unterdruck entsteht beispielsweise in einer Motoransaugleitung eines Otto-Motors. Im normalen Bremsbetrieb stehen Vorderradbremsdrücke und Hinterradbremsdrücke in einem gleichbleibenden Verhältnis, beispielsweise im Verhältnis 1 : 1. Dies wird erreicht durch Anordnung eines sogenannten Schwimmkolbens zwischen zwei Arbeitskammern des Hauptbremszylinders. Um eine ausreichende Spurstabilität beim Bremsen ohne Blockierschutzbetrieb sicherzustellen, wird die Bremskraftverteilung beispielsweise durch Durchmesserabstimmung von Radbremskolben zwischen den Vorderrädern und den Hinterrädern so gewählt, daß auf gleichmäßig beschaffener Fahrbahn Blockiergefahr zuerst an Vorderrädern auftritt. Dies hat den Nachteil, daß im Fall von nur an Vorderrädern einsetzendem Blockierschutzbetrieb ein zwischen den Hinterrädern und der Fahrbahn vorhandener Kontakt nur unvollkommen zur Fahrzeugverzögerung ausgenutzt wird.

Eine durch die Druckschrift DE-A-3 410 083 bekannte hydraulische Bremsanlage mit einem per Bremspedal steuerbaren hydraulischen Bremskraftverstärker, mit einem Hauptbremszylinder, mit vorderen und hinteren Radbremsen und mit einer zwischen dem Hauptbremszylinder und den Radbremsen angeordneten Blockierschutzeinrichtung zum Verändern von Drücken in den Radbremsen in Abhängigkeit des Drehverhaltens von den Radbremsen zugeordneten Rädern eines Fahrzeugs ist in der Weise mit einschaltbaren Mitteln ausgestattet, daß bei einsetzendem Blockierschutzbetrieb in Radbremsen Bremsdrücke einleitbar sind, die über einen von einem Fahrzeuglenker durch Betätigen der Bremsanlage unter Zuhilfenahme des Bremskraftverstärkers im Hauptbremszylinder zustandegebrachten Druck erhöht sind. Hierfür wird aus einem dem hydraulischen Bremskraftverstärker zugeordneten Druckspeicher hydraulisches Druckmittel anstelle von Druckmittel aus dem Hauptbremszylinder der Blockierschutzeinrichtung zugeleitet unter Verwendung von Leitungen und in diese eingebauten elektromagnetisch öffenbaren Wegeventilen und unter Verwendung von beispielsweise zwei elektromagnetisch schließbaren Wegeventilen, die in von dem Hauptbremszylinder ausgehende Hauptbremsleitungen eingebaut sind. Voraussetzungsgemäß ist der bevorratete Druck im Druckspeicher mindestens so hoch wie der für den Blockierschutzbetrieb vorgeplante höchste erhöhte Bremsdruck. Die elektromagnetisch schließbaren Wegeventile in den Hauptbremsleitungen dienen hierbei dazu, einen Abfluß von hydraulischem Druckmittel in und durch den Hauptbremszylinder gegen dessen relativ niedrigen Druck zu verhindern. Weil aber der Abfluß von hydraulischem Druckmittel in den Hauptbremszylinder verhindert ist, kann offensichtlich der Fahrzeuglenker nicht durch teilweises Loslassen willkürlich die Bremswirkung vermindern. Es erfolgt also eine Bremsung mit größtmöglicher Reibwertausnutzung zwischen Rädern und der darunter befindlichen Fahrbahn.

Es stellte sich die Aufgabe, eine verbesserte hydraulische Bremsanlage mit einer Blockierschutzeinrichtung und mit im Blockierschutzbetrieb einschaltbaren Mitteln zum Erhöhen von Bremsdrücken zu schaffen.

### Vorteile der Erfindung

Die erfindungsgemäße hydraulische Fahrzeugbremsanlage mit den kennzeichnenden Merkmalen des Anspruchs 1 hat den Vorteil, daß die Blockierschutzeinrichtung unter Weglassung der Wegeventile des Standes der Technik unmittelbar und also ständig und ohne die Gefahr einer ungewollten Unterbrechung mit dem Hauptbremszylinder kommuniziert und daß während eines Blockierschutzbetriebs ein der Blockierschutzeinrichtung zur Verfügung gestellter Druck mittels des Bremspedals, das den Bremskraftverstärker steuert, willkürlich vom Fahrzeuglenker veränderbar ist.

Durch die in den Unteransprüchen aufgeführten Maßnahmen sind vorteilhafte Weiterbildungen und Verbesserungen der im Hauptanspruch angegebenen Fahrzeugbremsanlage möglich.

Die kennzeichnenden Merkmale des Anspruchs 2 geben ein praktisches Ausführungsbeispiel an, für das beispielsweise Elemente eines bereits vorhandenen Bremskraftverstärkers weiterverwendbar sind. Die kennzeichnenden Merkmale des Anspruchs 3 geben ein preisgünstiges Ausführungsbeispiel an, weil durch geringfügigen Umbau eines mit Unterdruck betreibbaren sogenannten Doppelmembran-Bremskraftverstärkers des Typs T 51 der deutschen Firma Teves die Erfindung ausführbar ist. Die kennzeichnenden Merkmale des Anspruchs 4 geben ein Ausführungsbeispiel an zur Verwendung in einem Fahrzeug, das eine Druckluftquelle besitzt. Die kennzeichnenden Merkmale des Anspruchs 5 geben eine Weiterbildung an zur zusätzlichen Durchführung von Antriebsschlupfregelbetrieb über eine Kompensation von überschüssigen Antriebsdrehmomenten durch Bremsung des zum Durchdrehen neigenden Antriebsrades.

Die kennzeichnenden Merkmale des Anspruchs 6 geben eine Weiterbildung an, bei der im Antriebsschlupfregelbetrieb das Bremspedal in seiner Normalstellung verbleibt und deshalb jederzeit vom Fahrer in der gewohnten Weise an der gewohnten Stelle auffindbar ist. Die kennzeichnenden Merkmale des Anspruchs 7 sind unter anderem in vorteilhafter Weise dazu geeignet, auch im Antriebsschlupfregelbetrieb das Bremspedal in seine Normalstellung zu führen, damit es dort mit Sicherheit vom Fahrer gefunden wird.

### Zeichnung

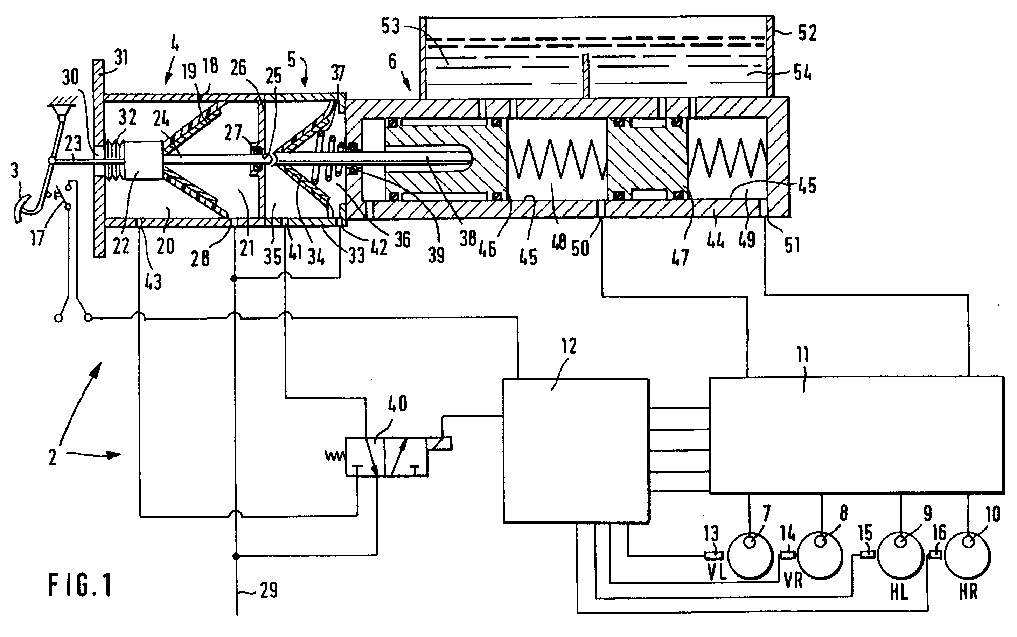

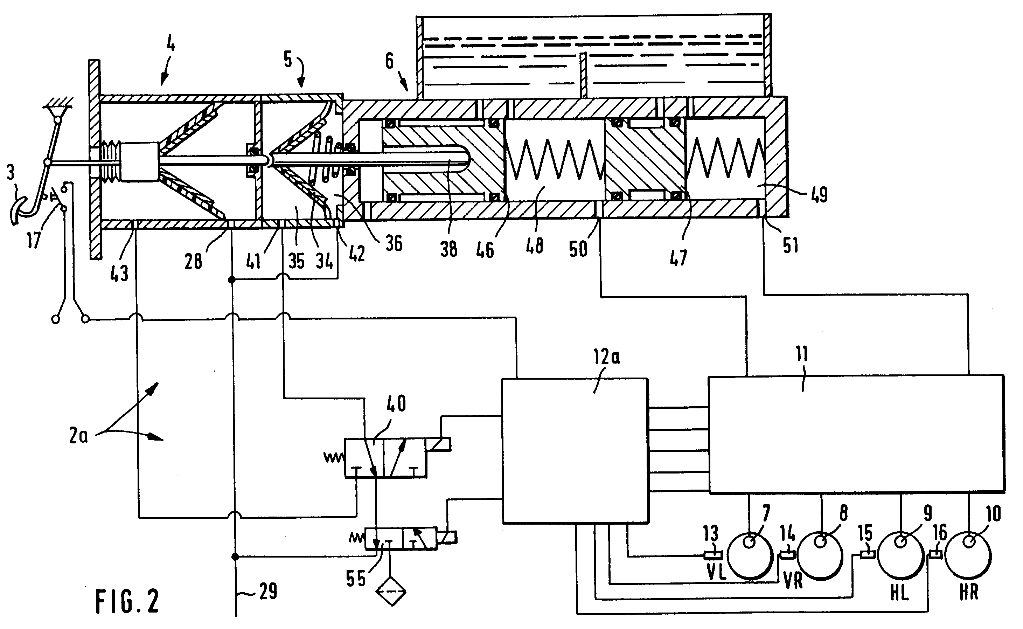

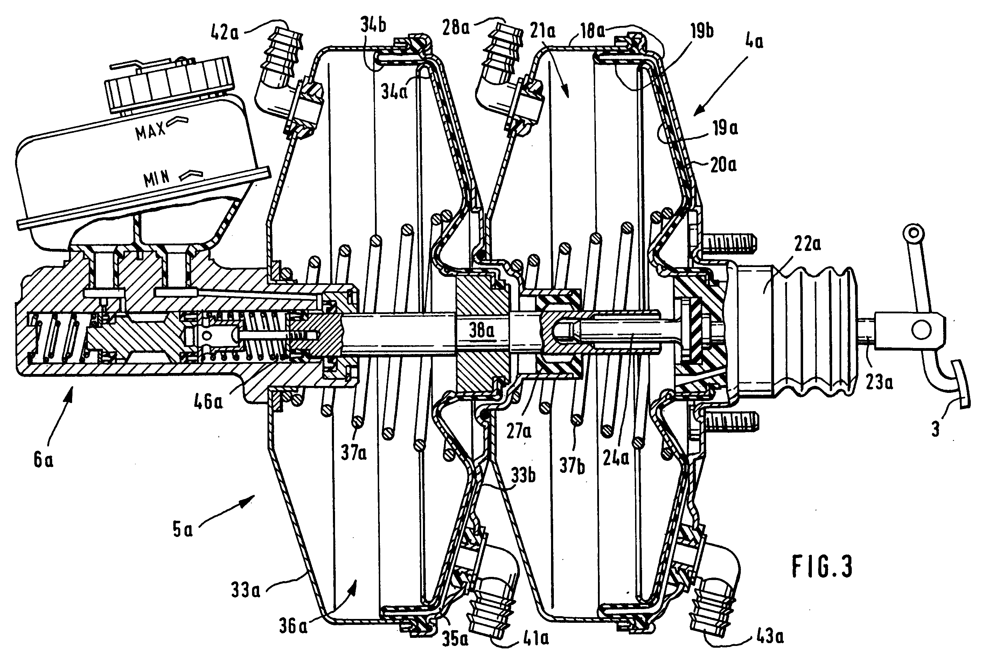

Drei Ausführungsbeispiele der Erfindung sind in der Zeichnung dargestellt und nachfolgend näher erläutert. Es zeigen Figur 1 ein erstes Ausführungsbeispiel der erfindungsgemäßen Fahrzeugbremsanlage, Figur 2 eine Weiterbildung der Fahrzeugbremsanlage gemäß der Figur 1 zu einem Antriebsschlupfregler und Figur 3 konstruktive Einzelheiten für die erfindungsgemäße Fahrzeugbremsanlage.

### Beschreibung der Ausführungsbeispiele

Die erfindungsgemäße hydraulische Fahrzeugbremsanlage 2 gemäß der Figur 1 besitzt ein Bremspedal 3, einen ersten Bremskraftverstärker 4, einen Zweiten Bremskraftverstärker 5, einen hydraulischen Tandemhauptbremszylinder 6, Radbremsen 7, 8, 9 und 10 mit nicht dargestellten Radbremszylindern, eine zwischen den Tandemhauptbremszylinder 6 und die Radbremsen 7 bis 10 eingefügte Blockierschutzeinrichtung 11, ein die Blockierschutzeinrichtung 11 steuerndes Steuergerät 12 und beispielsweise vier Raddrehungssensoren 13, 14, 15 und 16 sowie einen von dem Bremspedal 3 betätigbaren Schalter 17.

Der erste Bremskraftverstärker 4 ist schematisiert dargestellt und als ein sogenannter Unterdruckbremskraftverstärker ausgebildet. Der erste Bremskraftverstärker 4 hat ein Gehäuse 18, einen beispielsweise mittels einer Membran abgedichteten Kolben 19, der das Gehäuse 18 in eine erste pedalseitige Kammer 20 und eine zweite Kammer 21 unterteilt. Im Bereich der ersten Kammer 20 ist ein Bremskraftverstärkerventil 22 angeordnet, das in an sich bekannter Weise ausgebildet und mit dem Kolben 19 beziehungsweise seiner Membran vereinigt ist. Zur Steuerung des Bremskraftverstärkerventils 22 mittels des Bremspedals 3 ist eine Pedalstange 23 angeordnet, mittels der bei Bewegung des Bremspedals 3 das Bremskraftverstärkerventil 22 steuerbar ist. Von dem Kolben 19 und dem Bremskraftverstärkerventil 22 geht eine Druckstange 24 aus, die sich in Richtung des Hauptbremszylinders 6 erstreckt und in ihrer Normalstellung aus einer Öffnung 25 herausragt, die sich in einer stirnseitigen Wand 26 des Gehäuses 18 befindet. Relativ zur stirnseitigen Wand 26 ist die Druckstange 24 mittels eines Dichtringes 27 abgedichtet.

Der zweiten Kammer 21 des ersten Bremskraftverstärkers 4 ist ein Anschluß 28 zugeordnet. Über eine Leitung 29 ist der Anschluß 28 an eine nicht dargestellte Ansaugleitung eines Fahrzeugantriebsmotors des Otto-Typs oder ersatzweise an eine Unterdruckpumpe beispielsweise aus dem Stand der Technik angeschlossen. Ein weiterer Anschluß 30 hin zum Druck der umgebenden Atmosphäre ist ausgebildet in Form eines Loches, durch das die Pedalstange 23 hindurchgeführt ist. Zwischen einer pedalseitigen Stirnwand 31 des ersten Bremskraftverstärkers 4 und dem Bremskraftverstärkerventil 22 ist eine Abdichtung 32 vorgesehen, die die Umgebung und die erste Kammer 20 des Bremskraftverstärkers 4 voneinander trennt und in axialer Richtung des ersten Bremskraftverstärkers 4 entweder teleskopartig oder nach Art eines Balges nachgiebig ausgebildet ist. Wie bereits erwähnt, ist das Bremskraftverstärkerventil 22 beispielsweise dem Stand der Technik entnehmbar und so ausgebildet, daß es bei losgelassenem Bremspedal 3 die erste Kammer 20 von der Atmosphäre trennt und mit der zweiten Kammer 21 verbindet. Der dadurch zwischen den beiden Kammern 20 und 21 hergestellte Druckausgleich bewirkt, daß bezüglich der Längsachse des Bremskraftverstärkers 4 der Kolben 19 beziehungsweise die Membran druckausgeglichen ist, und daß der Kolben 19 und die Membran von wenigstens einer später erwähnten Rückstellfeder in die Ausgangslage drückbar sind. Eine Betätigung des Bremspedals 3 führt in an sich bekannter Weise zunächst zu einer Trennung der ersten Kammer 20 von der zweiten Kammer 21 und schließlich zu einer Verbindung der ersten Kammer 20 mit der Atmosphäre. Dies hat zur Folge, daß bei in der Leitung 29 vorhandenem Unterdruck relativ zur Atmosphäre und bei Einströmen von Luft aus der Atmosphäre durch den Anschluß 30 und das Bremskraftverstärkerventil 22 am Kolben 18 eine Kraft in Richtung des Hauptbremszylinders 6 erzeugt wird.

Der zweite Bremskraftverstärker 5 besitzt beispielsweise ein topfähnliches Gehäuse 33, das zwischen das Gehäuse 18 des ersten Bremskraftverstärkers 4 und den Hauptbremszylinder 6 eingefügt ist. In dem Gehäuse 33 sind ebenfalls ein Kolben 34 und beispielsweise eine abdichtende Membran angeordnet zum Unterteilen des Gehäuses 33 in eine erste Kammer 35 und eine zweite Kammer 36. In die zweite Kammer 36 kann eine bereits angesprochene Rückstellfeder 37 eingebaut sein, die den Kolben 34 in Richtung des ersten Bremskraftverstärkers 4 belastet. Mit dem Kolben 34 ist eine zweite Druckstange 38 verbunden, die in der Verlängerung der ersten Druckstange 24 ausgerichtet ist und mittels eines Dichtringes 39 zum Hauptbremszylinder 6 abgedichtet ist und sich in den Hauptbremszylinder 6 hinein erstreckt. Zum zweiten Bremskraftverstärker 5 gehört ein zweites Bremskraftverstärkerventil 40, das im vorliegenden Beispiel als ein elektromagnetisch steuerbares 3/2-Ventil ausgebildet ist. Dieses 3/2-Ventil 40 besitzt eine Grundstellung, in der es die Unterdruck aufweisende Leitung 29 über einen Anschluß 41 mit der ersten Kammer 35 im Gehäuse 33 verbindet. Ein weiterer Anschluß 42 am Gehäuse 33 ist der zweiten Kammer 36 zugeordnet und gemeinsam mit dem Anschluß 28 des ersten Bremskraftverstärkers 4 mit der Leitung 29 verbunden, so daß also ständig die zweite Kammer 21 des ersten Bremskraftverstärkers 4 und die zweite Kammer 36 des zweiten Bremskraftverstärkers 5 miteinander kommunizieren. Am Gehäuse 18 befindet sich ein der ersten Kammer 20 zugeordneter weiterer Anschluß 43. Dieser Anschluß 43 ist mit dem zweiten Bremskraftverstärkerventil 40 verbunden. Das zweite Bremskraftverstärkerventil 40 besitzt eine zweite Stellung, die sogenannte Steuerstellung, in der es den Anschluß 41 des zweiten Bremskraftverstärkers 5 von der Leitung 29 trennt und mit dem Anschluß 43 des ersten Bremskraftverstärkers 4 verbindet. Das zweite Bremskraftverstärkerventil 40 ist steuerbar mittels des Steuergeräts 12 in einer später erläuterten Weise.

Der Hauptbremszylinder 6 hat ein Gehäuse 44 mit einer Zylinderbohrung 45, in der ein erster pedalseitiger Hauptbremszylinderkolben 46 und ein zweiter pedalferner Hauptbremszylinderkolben 47 verschiebbar angeordnet sind. Der erste Hauptbremszylinderkolben 46 und der zweite Hauptbremszylinderkolben 47 begrenzen innerhalb der Zylinderbohrung 45 eine erste Hauptbremszylinderkammer 48. Der zweite Hauptbremszylinderkolben 47 begrenzt noch eine zweite Hauptbremszylinderkammer 49. Der ersten Hauptbremszylinderkammer 48 ist ein erster Hauptbremszylinderanschluß 50 zugeordnet. Dementsprechend ist auch der zweiten Hauptbremszylinderkammer 49 ein zweiter Hauptbremszylinderanschluß 51 zugeordnet. Aus Raumersparnisgründen ist der pedalseitige Hauptbremszylinderkolben 46 auf einem Teil seiner Länge hohl ausgebildet, und die zweite Druckstange 38 taucht in den Hauptbremszylinderkolben 46 ein. Zur Versorgung der Hauptbremszylinderkammern 48 und 49 ist ein Reservoir 52 mit zwei Becken 53 und 54 vorgesehen.

Die Blockierschutzeinrichtung 11 ist beispielsweise dem Stand der Technik entnehmbar, kann also so aufgebaut sein, wie dies in der eingangs erwähnten GB-PS 20 24 354 beschrieben ist. Es kann aber auch eine Blockierschutzeinrichtung verwendet werden, die nach dem sogenannten Rückförderprinzip arbeitet, das bereits in der in der Einleitungsbeschreibung genannten DE-A-4 004 316 beschrieben ist. Mithin kommt es auf den inneren Aufbau der Blockierschutzeinrichtung 11 nicht an. Charakteristisch ist hier lediglich, daß Bremsdrücke vom Hauptbremszylinder 6 geliefert werden, während Bremsdruckveränderungen in den Radbremsen 7 bis 10 zur Vermeidung von Radblockiergefahr von der Blockierschutzeinrichtung 11 durchgeführt werden. Damit die Blockierschutzeinrichtung 11 dies tut, ist sie an ein Steuergerät 12 angeschlossen, das seinerseits an die Raddrehungssensoren 13 bis 16 angeschlossen ist. Das Steuergerät 12 wertet Raddrehungssignale aus den Raddrehungssensoren 13 bis 16 aus und steuert in Abhängigkeit von Auswertungen gegebenenfalls die Blockierschutzeinrichtung 11 in der Weise, daß keines der von den Radbremsen 7 bis 10 gebremsten Räder blockiert.

Die erwähnte Funktion des Steuergerätes 12 ist typisch für eine Blockierschutzeinrichtung 11. Zusätzlich ist aber auch das Steuergerät 12 eingerichtet zur Steuerung des zweiten Bremskraftverstärkerventils 40. Die Ansteuerung des zweiten Bremskraftverstärkerventils 40 erfolgt, sobald aufgrund von Raddrehungssignalen aus den Raddrehungssensoren 13 bis 16 das Steuergerät Radblockiergefahr an wenigstens einem Rad festgestellt hat. Die hierdurch ausgelöste Steuerung des zweiten Bremskraftverstärkerventils 40 aus seiner Normalstellung in die Steuerstellung bewirkt, daß ein durch die Betätigung des Bremspedals 3 über das erste Bremskraftverstärkerventil 4 in der ersten Kammer 20 eingestellter Druck einen gleich großen Druck in der ersten Kammer 35 des zweiten Bremskraftverstärkers 5 bewirkt. Infolgedessen wird zu einer vom Kolben 19 erzeugten Verstärkungskraft, die über die erste Druckstange 24 auf die zweite Druckstange 38 und damit den ersten Hauptbremszylinderkolben 46 übertragen wird, eine Kraft addiert, die aus der nunmehr mittels des zweiten Bremskraftverstärkerventils 40 eingesteuerten Druckdifferenz zwischen der ersten Kammer 35 und der zweiten Kammer 36 des zweiten Bremskraftverstärkers 5 zustande kommt. Im schematisch dargestellten Ausführungsbeispiel gemäß der Figur 1 sind die wirksamen Flächen der Kolben 19 und 34 im wesentlichen gleich groß, so daß bei Zuschaltung des zweiten Bremskraftverstärkers 5 mittels des zweiten Bremskraftverstärkerventils 40 die auf den ersten Hauptbremszylinderkolben 46 wirkende Kraft im wesentlichen verdoppelt wird. Zusätzlich ist noch diejenige Kraft zu beachten, die durch die Betätigung des Bremspedals 3 über die Pedalstange 23, die erste Druckstange 24 und die zweite Druckstange 38 auf den Hauptbremszylinderkolben 46 wirkt. Infolge der beschriebenen Zuschaltung entsteht ein Hauptbremszylinderdruck, der über dem ursprünglichen Hauptbremszylinderdruck liegt, aber das Doppelte des ursprünglichen Hauptbremszylinderdrucks beispielsweise noch nicht erreicht.

Die durch Ansteuern des zweiten Bremskraftverstärkerventils 40 im Hauptbremszylinder 6 erfolgende Druckerhöhung wird dazu benützt, in den Radbremsen solcher Räder, die noch nicht zum Blockieren neigen, Bremsdrücke zu erhöhen, bis schließlich das Steuergerät 12 erkennt, daß ein bestmöglicher Kontakt zwischen den Rädern und der Fahrbahn in günstiger Weise für das Bremsen ausgenützt ist. Dann sorgt das Steuergerät 12 über die Blockierschutzeinrichtung 11 dafür, daß Überbremsungen der Räder vermieden werden. Diese Funktionsweise hat, wie bereits in der Beschreibungseinleitung angesprochen, den Vorteil, daß Hinterräder, die normalerweise später zum Blockieren neigen und deshalb relativ wenig Beitrag zur Gesamtbremsung liefern, in erhöhtem Maß für die Verzögerung des Fahrzeugs einsetzbar sind mit dem sich daraus ergebenden Vorteil der Verkürzung von Bremswegen.

Ein zweiter Vorteil der Funktionsweise der erfindungsgemäßen hydraulischen Bremsanlage ergibt sich dann, wenn auf einer Fahrbahn mit einem griffigen Streifen und einem vereisten Streifen lediglich so stark gebremst wird, daß über dem vereisten Streifen wenigstens ein Rad zum Blockieren neigt, daß aber auf der im griffigen Fahrstreifen sich bewegende Räder noch fern von einer Blockiergefahr sind. Dann bewirkt die Umschaltung des zweiten Bremskraftverstärkerventils 40 eine Druckerhöhung im Hauptbremszylinder 6 und einen Bremsdruckanstieg in den genannten Rädern, so daß schließlich die Räder über dem griffigeren Fahrbahnstreifen einen erhöhten Beitrag zur Fahrzeugverzögerung leisten können.

Das zweite Ausführungsbeispiel der erfindungsgemäßen Fahrzeugbremsanlage 2a gemäß der Figur 2 unterscheidet sich von dem Ausführungsbeispiel gemäß der Figur 1 dadurch, daß zusätzlich zum zweiten Bremskraftverstärkerventil 40, das elektrisch steuerbar ist, ein weiteres elektrisch steuerbares 3/2-Ventil 55 eingebaut ist. Dieses 3/2-Ventil 55 ist so ausgebildet und eingebaut, daß es in seiner Grundstellung die Leitung 29 des ersten Ausführungsbeispiels gemäß der Figur 1 mit demjenigen Anschluß des zweiten Bremskraftverstärkerventils 40 verbindet, der über das in seiner Grundstellung befindliche zweite Bremskraftverstärkerventil 40 durch dieses Ventil hindurch mit der ersten Kammer 35 des zweiten Bremskraftverstärkers 50 kommuniziert. Des weiteren ist das weitere 3/2-Ventil 55 so eingerichtet und verschaltet, daß es in seiner angesteuerten Stellung das zweite Bremskraftverstärkerventil 40 von der Leitung 29 trennt und mit der Atmosphäre verbindet. In dieser Stellung des weiteren 3/2-Ventils 55 gelangt Atmosphärendruck auf dem Weg durch das zweite Bremskraftverstärkerventil 40 in die erste Kammer 35 des zweiten Bremskraftverstärkers 5. Dieser Atmosphärendruck ist höher als derjenige Druck, der in der zweiten Kammer 36 des zweiten Bremskraftverstärkers 5 herrscht infolge von dessen Anbindung an die Leitung 29. Die zwischen den beiden Kammern 35 und 36 durch Umschalten des weiteren 3/2-Ventils 55 erzeugbare Druckdifferenz bewirkt eine Verschiebekraft auf die zweite Druckstange 38, die ihrerseits auf den ersten Hauptbremszylinderkolben 46 wirkt. Die Umschaltung des 3/2-Ventils 55 in die beschriebene Steuerstellung bewirkt also eine Verschiebung des ersten Hauptbremszylinderkolbens 46, so daß im Hauptbremszylinder 6 insgesamt, das heißt in beiden Hauptbremszylinderkammern 48 und 49 Drücke entstehen. Diese Drücke werden durch die beiden Hauptbremszylinderanschlüsse 50 und 51 der Blockierschutzeinrichtung 11 zugeführt. In Verbindung mit dem 3/2-Ventil 55 wird vorzugsweise eine Blockierschutzeinrichtung verwendet, die nach dem sogenannten Rückförderprinzip arbeitet. Ein Beispiel hierfür gibt die bereits erwähnte DE-OS 39 26 242 an. An diese Blockierschutzeinrichtung 11 sind die Radbremsen 7 bis 10 angeschlossen, von denen wenigstens zwei zu Antriebsrädern des mit dieser Bremsanlage ausgerüsteten Fahrzeugs gehören.

Anders ausgebildet als im ersten Ausführungsbeispiel gemäß der Figur 1 ist das Steuergerät 12a, das mit dem Schalter 17 verbunden ist. Der Schalter 17 ist mittels des Bremspedals 3 schließbar. Bleibt der Schalter 17 offen, so erkennt infolge des Ausbleibens eines Schließsignals das Steuergerät 12a, daß aufgrund von Signalen aus den Raddrehungssensoren 13 bis 16 ermittelter unzulässig anwachsender Schlupf nicht durch Überbremsen von Rädern, sondern durch Durchdrehneigung von wenigstens einem Antriebsrad verursacht ist.

Wenn dieser Fall der Durchdrehneigung wenigstens eines Antriebsrades erkannt ist, trennt die Blockierschutzeinrichtung 11 die Radbremsen derjenigen Räder, die nicht zum Durchdrehen neigen, von dem Hauptbremszylinder 6 und läßt lediglich diejenige oder diejenigen Verbindungen zwischen den Radbremsen von wenigstens einem der zum Durchdrehen neigenden Räder und dem Hauptbremszylinder 6 bestehen. Durch Umschalten des zweiten 3/2-Ventils 55 in die Steuerstellung mittels des Steuergeräts 12a wird eine Druckdifferenz in dem zweiten Bremskraftverstärker 5 bewirkt, die einen Druckanstieg im Hauptbremszylinder 6 verursacht. Der Druck des Hauptbremszylinders 6 pflanzt sich fort zu der wenigstens einen Radbremse, die mit dem Hauptbremszylinder 6 kommuniziert. Infolgedessen entsteht in der Radbremse ein Druckanstieg, der zur Kompensation von überschüssigem Antriebsmoment benützt wird. In bereits bekannter Weise bewirkt das Steuergerät 12a, daß bei ausreichender Antriebsüberschußmomentkompensation kein weiterer Bremsdruckanstieg in der betreffenden Radbremse entsteht, und daß beim Verschwinden von Durchdrehneigung der Bremsdruck abgesenkt wird.

Anhand der Ausführungsbeispiele gemäß den Figuren 1 und 2 wurden ein erster Bremskraftverstärker 4 und ein zweiter Bremskraftverstärker 5 beschrieben, wobei der zweite Bremskraftverstärker 5 nach Art einer zwischen den ersten Bremskraftverstärker 4 und den Hauptbremszylinder 6 einsetzbaren zusätzlichen Baugruppe ausgestaltet ist. Die Figur 3 zeigt, wie man sehr weitgehend Bauteile eines auf dem Markt erhältlichen Bremskraftverstärkers des Typs T52/3 der deutschen Firma TEVES zur Realisierung der in den Figuren 1 und 2 schematisch dargestellten Fahrzeugbremsanlagen verwenden kann.

Zur Vereinfachung der Beschreibung werden gleich wirkende Elemente mit den ursprünglichen Bezugszeichen unter Hinzufügung von "a" verwendet.

Der erste Bremskraftverstärker 4a hat ein zweiteiliges Gehäuse 18a, einen mittels einer Membran 19b abgedichteten tellerartig ausgebildeten Kolben 19a, eine erste pedalseitige Kammer 20a und eine zweite Kammer 21a, ein Bremskraftverstärkerventil 22a, eine Pedalstange 23a und eine Druckstange 24a. Zum Abdichten der zweiten Kammer 21a ist ein Dichtring 27a bestimmt. Der zweiten Kammer 21a ist am Gehäuse 18a ein Anschluß 28a zugeordnet. Ein weiterer Anschluß 43a gehört zur ersten Kammer 20a.

In den zweiten Bremskraftverstärker 5a übernommen sind die hauptbremszylinderseitige Hälfte 33a des marktüblichen Bremskraftverstärkers T52/3, dessen Kolben 34a mitsamt der Membran 34b, die wieder eine erste Kammer 35a von einer zweiten Kammer 36a trennt. Die andere Hälfte 33b ist stutzenartig ausgebildet und nimmt den Dichtring 27a auf. Die erste Kammer 35a besitzt einen Anschluß 41a. Und die zweite Kammer 36a hat einen Anschluß 42a. Eine Rückstellfeder 37a kann den Kolben 34a in seine Normalstellung schieben. Eine weitere Rückstellfeder 37b kann dem Kolben 19a des ersten Bremskraftverstärkers 4a zugeordnet werden mit dem Vorteil, daß das Bremspedal 3 in Richtung seiner Ausgangsstellung belastet wird. Eine zweite Druckstange 38a ist ebenfalls vorhanden und zusätzlich so gestaltet, daß sie von dem Dichtring 27a abdichtend umfaßt wird und noch innerhalb eines serienmäßigen Hauptbremszylinders 4a einen ersten Hauptbremszylinderkolben 46a bildet.

Die Anschlüsse 28a, 41a, 42a und 43a sind in der bereits für die Anschlüsse 28, 41, 42 und 43 der Figuren 1 und 2 beschriebenen Weise mit der Leitung 29 und dem 3/2-Ventil 30 oder den 3/2-Ventilen 40 und 55 verbunden. Deshalb ergibt sich für die beispielsweise konstruktive Ausgestaltung der Bremskraftverstärker 4a und 5a die gleiche Funktion wie für die voranstehend beschriebenen Ausführungsbeispiele. Eine der Rückstellfeder 37b entsprechende Rückstellfeder kann natürlich auch in die Ausführungsbeispiele der Figuren 1 und 2 eingefügt werden, damit ein Fahrer während eines andauernden oder zu Ende gehenden Antriebsschlupfregelbetriebs mit Sicherheit das Bremspedal 3 in dessen Normalstellung findet.

Es liegt im Bereich der Erfindung, daß die Kammern 35 und 36 und der Kolben 34 beziehungsweise dessen Membran auch in ein mit dem ersten Bremskraftverstärker gemeinsames Gehäuse einbaubar sind. Hierfür wird auf den in der Beschreibungseinleitung erwähnten Doppelmembran-Bremskraftverstärker des Typs T 51 hingewiesen.

Anstelle von sogenannten Unterdruck- beziehungsweise Vakuum-Bremskraftverstärkern sind natürlich auch mit pneumatischem Überdruck arbeitende Verstärker einsetzbar.

Weiterhin ist es mit Blick auf bekannte hydraulische Bremskraftverstärker auch möglich, den ersten Bremskraftverstärker 4 und den zweiten Bremskraftverstärker 5 oder eine bauliche Kombination aus beiden so zu gestalten, daß die Funktionen bezüglich einer Erhöhung des Hauptbremszylinderdrucks im Blockierschutzfall unter Verwendung einer hydraulischen Energiequelle durchführbar ist.

## Patentansprüche

1. Hydraulische Fahrzeugbremsanlage (2) mit einem per Bremspedal (3) steuerbaren Bremskraftverstärker (4), mit einem Hauptbremszylinder (6), mit vorderen und hinteren Radbremsen (7, 8, 9, 10) und mit einer zwischen dem Hauptbremszylinder (6) und den Radbremsen angeordneten Blockierschutzeinrichtung (11) zum Verändern von Bremsdrücken in den Radbremsen in Abhängigkeit des Drehverhaltens von den Radbremsen zugeordneten Rädern eines Fahrzeugs und mit einem Steuergerät (12, 12a) der Blockierschutzeinrichtung (11) das eingerichtet ist zur Einschaltung einer Erhöhung des Bremsdrucks beim Beginn eines Blockierschutzbetriebs, dadurch gekennzeichnet, daß der Bremskraftverstärker (4, 5) eingerichtet ist zur Erhöhung seiner Bremskraftverstärkung beim Beginn eines Blockierschutzbetriebs.

2. Hydraulische Fahrzeugbremsanlage nach Anspruch 1, dadurch gekennzeichnet, daß der Bremskraftverstärker (4, 4a) ein Bremskraftverstärkerventil (22, 22a) und eine erste Kammer (20, 20a) mit einem ersten Kolben (19, 19a) aufweist, daß eine weitere Kammer (35, 35a) mit einem zweiten Kolben (34, 34a) zur Erhöhung der Bremskraftverstärkung vorgesehen ist, und daß diese weitere Kammer (35, 35a) über ein im Blockierschutzbetrieb vom Steuergerät (12, 12a) steuerbares zweites Bremskraftverstärkerventil (40) mit der ersten Kammer (20, 20a) verbindbar ist.

3. Hydraulische Fahrzeugbremsanlage nach Anspruch 2, dadurch gekennzeichnet, daß der Bremskraftverstärker (4, 4a) als Vakuum-Bremskraftverstärker ausgebildet ist.

4. Hydraulische Fahrzeugbremsanlage nach Anspruch 2, dadurch gekennzeichnet, daß der Bremskraftverstärker als pneumatischer Bremskraftverstärker ausgebildet ist.

5. Hydraulische Fahrzeugbremsanlage nach einem der Ansprüche 2 bis 4, dadurch gekennzeichnet, daß zur Durchführung von Antriebsschlupfbegrenzungsbetrieb der weiteren Kammer (35, 35a) eine weiteres Ventil (55) zugeordnet ist zur Beaufschlagung des zweiten Kolbens (34, 34a) im Sinne der Erzeugung von Bremskraft, und daß das Steuergerät (12a) zum Steuern der Blockierschutzeinrichtung (11) im Antriebsschlupfbegrenzungsbetrieb derart eingerichtet ist, daß Drücke aus dem Hauptbremszylinder (6) der wenigstens einen Radbremse wenigstens eines durchdrehenden Rades zugeführt und mittels der Blockierschutzeinrichtung im Sinne einer Antriebsmomentüberschußkompensation moduliert werden.

6. Hydraulische Fahrzeugbremsanlage nach einem der Ansprüche 2 bis 5, dadurch gekennzeichnet, daß der zweite Kolben (34, 34a) zwischen dem ersten Kolben (19 19a) und dem Hauptbremszylinder (6) angeordnet und unabhängig vom ersten Kolben (19) gegen den Hauptbremszylinder (6) bewegbar ist infolge von Druckbeaufschlagung in Richtung zum Hauptbremszylinder (6).

7. Hydraulische Fahrzeugbremsanlage nach Anspruch 6, dadurch gekennzeichnet, daß wenigstens einem der Kolben (19, 19a, 34, 34a) eine Rückstellfeder (37, 37a, 37b) zugeordnet ist.

## Claims

1. Hydraulic vehicle brake system (2) with a brake power booster (4) which can be controlled using a brake pedal (3), with a master brake cylinder (6), with front and rear wheel brakes (7, 8, 9, 10) and with an anti-lock device (11), arranged between the master brake cylinder (6) and the wheel brakes, for changing brake pressures in the wheel brakes as a function of the rotational behaviour of wheels, assigned to the wheel brakes, of a vehicle, and with a control device (12, 12a) of the anti-lock device (11) which is designed to switch on an increase in the brake pressure at the start of an anti-lock operation, characterised in that the brake power booster (4, 5) is designed to increase its brake power boosting at the start of an anti-lock operation.

2. Hydraulic vehicle brake system according to Claim 1, characterized in that the brake power booster (4, 4a) has a brake power booster valve (22, 22a) and a first chamber (20, 20a) with a first piston (19, 19a), in that a further chamber (35, 35a) is provided with a second piston (34, 34a) for increasing the brake power boosting, and in that this further chamber (35, 35a) can be connected to the first chamber (20, 20a) via a second brake power booster valve (40) which can be controlled by the control device (12, 12a) during anti-lock operation.

3. Hydraulic vehicle brake system according to Claim 2, characterized in that the brake power booster (4, 4a) is constructed as a vacuum brake power booster.

4. Hydraulic vehicle brake system according to Claim 2, characterized in that the brake power booster is constructed as a pneumatic brake power booster.

5. Hydraulic vehicle brake system according to one of Claims 2 to 4, characterized in that, in order to carry out traction slip control mode, a further valve (55) is assigned to the further chamber (35, 35a) in order to act on the second piston (34, 34a) in order to produce braking power, and in that the control device (12a) for controlling the anti-lock device (11) during traction slip control mode is designed in such a way that pressures from the master brake cylinder (6) are fed to the at least one wheel brake of at least one slipping wheel and are modulated by means of the anti-lock device in order to compensate excess drive torque.

6. Hydraulic vehicle brake system according to one of Claims 2 to 5, characterized in that the second piston (34, 34a) is arranged between the first piston (19, 19a) and the master brake cylinder (6) and can be moved against the master brake cylinder (6) independently of the first piston (19) as a result of the application of pressure in the direction of the master brake cylinder (6).

7. Hydraulic vehicle brake system according to Claim 6, characterized in that a restoring spring (37, 37a, 37b) is assigned to at least one of the pistons (19, 19a, 34, 34a).

## Revendications

1. Installation de freinage hydraulique de véhicule (2) comportant un amplificateur de force de frein (4) commandé par la pédale de frein (3), un maître-cylindre (6), des freins de roues avant et arrière (7, 8, 9, 10) et un dispositif anti-blocage (11) monté entre le maître-cylindre (6) et les freins de roues pour modifier la pression des freins de roues en fonction du comportement en rotation des roues d'un véhicule équipé des freins de roues, et un dispositif de commande (12, 12a) du dispositif antiblocage (11) qui assure une augmentation de la pression de frein au début du fonctionnement anti-blocage, caractérisée en ce que l'amplificateur de force de freinage (4, 5) est conçu pour augmenter son amplification de la force de freinage au début d'une phase de fonctionnement anti-blocage.

2. Installation de freinage hydraulique de véhicule selon la revendication 1, caractérisée en ce que l'amplificateur de force de freinage (4, 4a) comporte une soupape d'amplification de force de freinage (22, 22a) et une première chambre (20, 20a) avec un premier piston (19, 19a), une autre chambre (35, 35a) avec un autre piston (34, 34a) pour augmenter l'amplification de la force de freinage, et cette autre chambre (35, 35a) peut être reliée à la première chambre (20, 20a) par une seconde électrovanne d'amplification de force de freinage (40) commandée par le dispositif de commande (12, 12a) en mode anti-blocage.

3. Installation de freinage hydraulique de véhicule selon la revendication 2, caractérisée en ce que l'amplificateur de force de freinage (4, 4a) est un amplificateur de force de freinage sous vide.

4. Installation de freinage hydraulique de véhicule selon la revendication 2, caractérisée en ce que l'amplificateur de la force de freinage est un amplificateur pneumatique.

5. Installation de freinage hydraulique de véhicule selon les revendications 2 à 4, caractérisée en ce que, pour mettre en oeuvre le mode de limitation de patinage à l'entraînement, une autre électrovanne (55) est associée à l'autre chambre (35, 35a) pour solliciter le second piston (34, 34a) dans le sens de la création d'une force de freinage, et le dispositif de commande (12a) est conçu pour commander le dispositif anti-blocage (11) en mode de limitation de patinage à l'entraînement pour que les pressions du maître-cylindre (6) soient transmises au moins au frein de roue de la roue qui s'emballe et soient modulées par le dispositif anti-blocage dans le sens d'une compensation de couple moteur excessif.

6. Installation de freinage hydraulique de véhicule selon l'une des revendications 2 à 4, caractérisée en ce que le second piston (34, 34a) est monté entre le premier piston (19, 19a) et le maître-cylindre (6) et se déplace indépendamment du premier piston (19) contre le maître-cylindre (6), du fait de la sollicitation en pression en direction du maître-cylindre (6).

7. Installation de freinage hydraulique de véhicule selon la revendication 6, caractérisée par au moins un piston (19, 19a, 34, 34a) équipé d'un ressort de rappel (37, 37a, 37b).
